# EUROPEAN PATENT APPLICATION

(11) **EP 4 760 652 A1**
(43) Date of publication of application: **17.06.2026**
(21) Application number: 25220418.5
(22) Date of filing: 03.12.2025
(51) Int. Cl.: G06V 10/764, G06V 10/80, G06V 10/82, G06V 20/58

(54) **DISPLAY CONTROL DEVICE**

(30) Priority: 10.12.2024 JP 2024215280
(71) Applicant: Toyota Jidosha Kabushiki Kaisha, Toyota-shi, Aichi-ken 471-8571 (JP)
(72) Inventor: TAKADA, Arata, Toyota-shi, Aichi-ken, 471-8571 (JP)
(74) Representative: Cabinet Beau de Loménie

(57) **Abstract**

A display control device (42) including an object detection section (62) that detects a presence of an object (80) using an other-sensor (22) other than a camera (24), and that identifies a classification of the object (80) from an image captured by the camera (24), and including a display control section (64) that, in cases in which an object (80) has been detected inside a detection range (90) of the other-sensor (22) but outside of an identification range (92) of object classification by the camera (24) and a classification of the object (80) is unable to be identified, displays on a display section (56, 58) a generic object (80B) having a substantially cuboidal shape set with a lower height than an icon employed when displaying according to the classification.

## Description

### Technical Field

The present disclosure relates to a display control device.

### Related Art

An object detection device capable of using a captured image to determine an object type with good accuracy is disclosed in Japanese Patent Application Laid-Open (JP-A) No. 2017-054311 (Patent Document 1). In Patent Document 1, a pedestrian or a two-wheeled vehicle is detected as an object present in the surroundings of an ego vehicle by performing image processing on an image captured of a progression direction of the ego vehicle. The type of the object is provisionally determined by analyzing the captured image, and then a movement speed of the object is employed to properly determine the type of the provisionally determined object.

Moreover in related art, for example, technology is known in which, as presence information of an object detected by a sensor or the like, an object is displayed as an icon on a display device. However, an issue arises when the object is inside a detection range of an other-sensor but outside a detection range of a camera, in that a classification of the object is unable to be specified even though the object can be identified as being present, and so display is unable to be made unless the object enters the identification range of the camera. This means that although a switch to an appropriate classification of icon is made at the point in time when the object has entered into the identification range of the camera, there is a possibility that a user might experience an uncanny feeling if the icon is switched to a completely different type of icon.

### SUMMARY

An object of the present disclosure is to provide a display control device capable of reducing an uncanny feeling of a user when displaying an object of classification unable to be identified.

A display control device according to a first aspect includes an object detection section that detects a presence of an object using an other-sensor provided to an ego vehicle other than a camera and that identifies a classification of the object from an image captured by the camera provided to the ego vehicle, and a display control section that, in cases in which an object has been detected inside a detection range of the other-sensor but outside of an identification range of object classification by the camera and a classification of the object is unable to be identified, displays on a display section a generic object set with a lower height than an icon employed when displaying according to the classification.

The display control device according to the first aspect displays the generic object for an object whose classification is unable to be identified. This thereby enables a user to easily ascertain that the classification of the object is unidentified, enabling objects to be discriminated without an uncanny feeling when an object is switched to being identified.

A display control device according to a second aspect is the first aspect, wherein the display control section predicts a classification having a high probability of being present in surroundings of the ego vehicle, and displays a generic object of a size corresponding to an object of the predicted classification. The second aspect enables an uncanny feeling of a user to be reduced by displaying a generic object corresponding to a classification having a high probability.

The display control device according to the third aspect is the second aspect, wherein as a method to predict a classification having a high probability of being present in the surroundings of the ego vehicle, the display control section predicts the classification of high probability from frequency information of classifications of objects identified in the surroundings of the ego vehicle. The third aspect enables an uncanny feeling of a user to be reduced by displaying a generic object according to frequency of classification in the surroundings.

A display control device according to a fourth aspect is the second aspect, wherein classifications of high probability are set in advance for sets of specified date and time and vehicle lane, and the display control section predicts the classification of high probability in a travelling vehicle lane from the sets that have been set. The fourth aspect enables an uncanny feeling of a user to be reduced by displaying a generic object according to specified date and time and travelling vehicle lane.

A display control device according to a fifth aspect is the fourth aspect, wherein the object detection section identifies at least a car, a commercial vehicle, a two-wheeled vehicle, and a pedestrian as the classifications of the object, and the display control section displays a generic object of a size of a car, a commercial vehicle, a two-wheeled vehicle, or a pedestrian that has been predicted as the classification of the object having a high probability. The fifth aspect enables a user to easily be made aware of a generic object by displaying a generic object corresponding to classifications easily identified by a user, i.e. a car, a commercial vehicle, a two-wheeled vehicle, and a pedestrian.

The technology disclosed herein enables an uncanny feeling of a user to be reduced when displaying objects with a classification unable to be identified.

### BRIEF DESCRIPTION OF DRAWINGS

Exemplary embodiments of the present disclosure will be described in detail based on the following figures, wherein:
Fig. 1 is a diagram illustrating a configuration of an onboard system according to an exemplary embodiment;
Fig. 2A is a diagram schematically illustrating an example of object detection;
Fig. 2B is a diagram schematically illustrating an example of object detection;
Fig. 3 is a diagram to explain size specific generic objects corresponding to classifications of object;
Fig. 4A is a diagram illustrating an example of predicting a classification of high probability from frequency information of classifications of objects as identified by travelling vehicle lane;
Fig. 4B is a diagram illustrating an example of predicting a classification of high probability from frequency information of classifications of objects as identified by travelling vehicle lane; and
Fig. 5 is a flowchart to explain a flow of display control processing as a display control method executed by a display control ECU of the present exemplary embodiment.

### DETAILED DESCRIPTION

### First Exemplary Embodiment

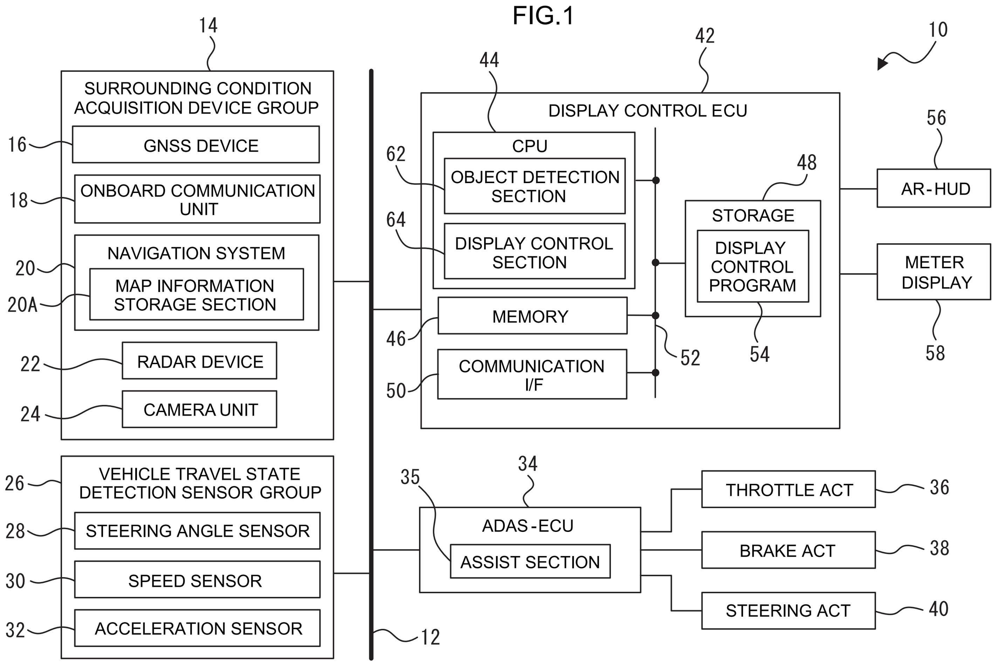

Detailed description follows regarding an example of an exemplary embodiment of the present disclosure, with reference to the drawings. As illustrated in Fig. 1, an onboard system 10 according to the present exemplary embodiment includes a communication bus 12. A surrounding condition acquisition device group 14, a vehicle travel state detection sensor group 26, an advanced driver-assistance system (ADAS)-ECU 34, and a display control ECU 42 are each connected to the communication bus 12. Note that only part of the onboard system 10 is illustrated in Fig. 1. Moreover, a vehicle installed with the onboard system 10 will hereinafter be referred to as an ego vehicle.

The surrounding condition acquisition device group 14 includes, as devices to acquire surroundings information expressing conditions such as the surrounding environment of the ego vehicle, a global navigation satellite system (GNSS) device 16, an onboard communication unit 18, a navigation system 20, a camera device 24, a radar device 22, and the like.

The GNSS device 16 receives a GNSS signal from plural GNSS satellites and measures a position of the ego vehicle. The onboard communication unit 18 performs at least one out of vehicle-to-vehicle communication with other vehicles or road-to-vehicle communication with roadside infrastructure. The navigation system 20 includes a map information storage section 20A that stores map information, and performs processing to display the position of the ego vehicle on a map and to decide a route to a destination and guide the ego vehicle there based on the position information obtained from the GNSS device 16 and on the map information stored in the map information storage section 20A.

The radar device 22 is a radar group that detects objects such as other vehicles and pedestrians present in the surroundings of the ego vehicle as point cloud information and that also detects objects at the front, sides, and rear of the ego vehicle. The radar device 22 also acquires relative positions and relative speeds of the ego vehicle to such detected objects. The radar device 22 is an example of an other-sensor of the present disclosure. The display control ECU 42, described later, detects the presence of objects from the detection results of the radar device 22.

The radar device 22 also removes noise and roadside objects such as guardrails from monitoring targets based changes in relative position and relative speed to the respective objects, and outputs information about the relative positions and relative speeds and the like to objects that are target objects for monitoring, such as other vehicles, pedestrians, and the like.

The camera unit 24 images the surroundings of the ego vehicle using plural cameras, and outputs the acquired images. Note that although in the present exemplary embodiment an example will be described of a case in which the camera unit 24 images in front of the ego vehicle, other cameras may also be envisaged, such as a side camera imaging rearward and a side camera imaging from a side mirror at a point-blank range sideways from the ego vehicle. In the display control ECU 42, described later, a classification of an object is identified from information about an object present in a captured image. The camera unit 24 is an example of a camera of the present disclosure.

The presence of objects is detected from the detection results of the radar device 22 as described above, however the classification of the object is unidentified, and the classification is identified by analyzing images of the camera unit 24.

The vehicle travel state detection sensor group 26 includes, as plural sensors to acquire a travel state of the ego vehicle, a steering angle sensor 28 to detect a steering angle of the ego vehicle, a speed sensor 30 that detects the travel speed of the ego vehicle, and an acceleration sensor 32 that detects a rate of acceleration acting on the ego vehicle.

A throttle actuator (ACT) 36 that changes the throttle position of the ego vehicle, a brake ACT 38 that changes braking force generated by a braking device of the ego vehicle, and a steering ACT 40 that changes a steering amount of a steering device of the ego vehicle, are also each connected to the ADAS-ECU 34.

The ADAS-ECU 34 includes, although not illustrated in the drawings, a CPU, memory such as ROM or RAM, storage such as an HDD, SSD, or the like, and a communication interface (I/F). A specific program that causes the CPU of the ADAS-ECU 34 to function as an assist section 35 is stored in the storage. When an ego vehicle is in a driver-assistance mode, the assist section 35 controls the throttle ACT 36, the brake ACT 38, and the steering ACT 40 based on information obtained from the surrounding condition acquisition device group 14 and from the vehicle travel state detection sensor group 26, and object detection results and the like by the display control ECU 42, and performs assistance processing to assist at least one out of acceleration-deceleration or steering of the ego vehicle. Examples of driver-assistance functions realized by such assistance processing include adaptive cruise control (ACC) to cause the ego vehicle to follow a vehicle ahead traveling in the ego vehicle lane, and lane keeping assist (LKA) to assist steering such that the ego vehicle travels in a center of its own vehicle lane.

The display control ECU 42 includes a CPU 44, memory 46 such as ROM or RAM, storage 48 such as a HDD, SSD, or the like, and a communication I/F 50. The CPU 44, the memory 46, the storage 48, and the communication I/F 50 are connected together through an internal bus 52 so as to be capable of communicating with each other. A display control program 54 is stored in the storage 48. The display control ECU 42 reads the display control program 54 from the storage 48, expands the display control program 54 in the memory 46, and the display control program 54 expanded in the memory 46 is executed by the CPU 44. The CPU 44 functions as an object detection section 62 and a display control section 64 and performs display control processing, described later. Note that the function as the object detection section 62 may be provided as an external function of the display control ECU 42, or may be configured by a provided by a separate object detection ECU.

The display control ECU 42 is connected to an augmented reality (AR)-head-up display (hereafter referred to as an AR-HUD) 56 and to a meter display 58. The AR-HUD 56 according to the present exemplary embodiment is a compact HUD using reflection onto the windshield glass as a display area in part of a forward field of view of the occupant of the ego vehicle (forming an image inside a lower portion of a forward scene). Moreover, the meter display 58 is a display provided to an instrument panel of the ego vehicle. The display control ECU 42 controls information display on the AR-HUD 56 and on the meter display 58. Note that the display control ECU 42 is an example of a display control device according to the present disclosure, and the AR-HUD 56 and the meter display 58 are examples of a display section of the present disclosure.

The object detection section 62 detects the presence of objects in the ego vehicle surroundings from the detection results of the radar device 22. Moreover, for detected objects, the object detection section 62 identifies a classification of the object from images captured with the camera unit 24. In the present exemplary embodiment, the object detection section 62 identifies, as classifications of objects, at least a car, a large commercial vehicle such as a truck, a two-wheeled vehicle, and a pedestrian.

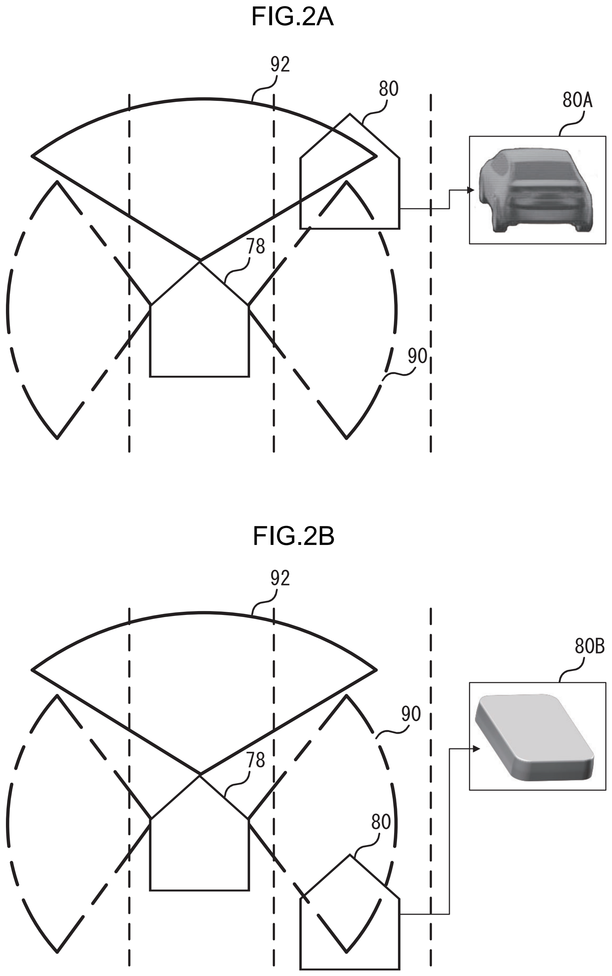

Figs. 2 are diagrams schematically illustrating examples of object detection. The examples of Fig. 2A and Fig. 2B include an ego vehicle image 78, an object 80 in the ego vehicle surroundings, a detection range 90 of the radar device 22, and an identification range 92 of the camera unit 24. Note that for ease of explanation of the detection ranges at the sides of the ego vehicle, the detection range 90 illustrated in Fig. 2A and Fig. 2B does not overlap with the identification range 92 of the camera unit 24, however, the detection range 90 may similarly include similar detection ranges at the front and rear that overlap with the identification range 92 of the camera unit 24.

In the example illustrated in Fig. 2A, the object 80 is present inside the detection range 90 of the radar device 22 and inside the identification range 92 of the camera unit 24, in a condition in which the classification of the object 80 is identifiable. The example of Fig. 2B is a condition in which the object 80 is present inside the detection range 90 of the radar device 22 but the object 80 is present outside the identification range 92 of the camera unit 24, and the classification of the object 80 is unidentifiable. In the case in which the object 80 can be identified as illustrated in Fig. 2A, an icon image 80A indicating the classification of the object 80 prepared according to the classification is displayed. In cases in which the object 80 is unable to be identified as illustrated in Fig. 2B, a generic object image 80B is displayed. The generic object image 80B has a substantially cuboidal shape set with a lower height than that for an icon when displaying according to classification. Displaying a generic object in this manner enables the presence of an object whose classification is not yet identified to be indicated. The height of the generic objects is made lower than that of an icon for a classified object. Displaying a generic object with a different sense of size to a classified icon prevents it from being mistaken for the display of a classified icon, enabling the fact that the classification is unidentified to be easily ascertained. Moreover, making the height of the generic object low and displaying at a minimum size necessary for identification enables a predicted classification to be easily conveyed from the size. There is no limitation to being substantially cuboidal in shape, and a shape indicating the object may be a trapezoid, a conical frustrum, or the like. Moreover, preliminary displaying the generic object in a display mode not specified as a car, commercial vehicle, two-wheeled vehicle, or pedestrian enables an uncanny feeling of a user to be reduced when an icon image corresponding to the identified classification is subsequently displayed.

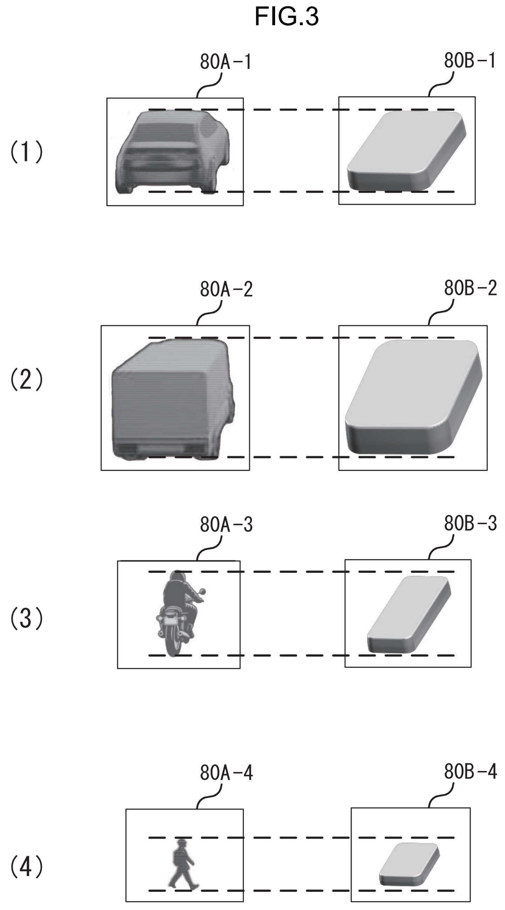

Fig. 3 is a diagram to explain size specific generic objects corresponding to object classifications. Fig. 3 (1) to (4) illustrate generic object images corresponding to respective icon images. The generic object images are set with a size that is substantially the same in width and depth size to the corresponding classification icon image. (1) illustrates an icon image (80A-1) indicating a car and a generic object (80B-1) of a size corresponding to a classification of a car. (2) illustrates an icon image (80A-2) indicating a commercial vehicle and a generic object (80B-2) of a size corresponding to a classification of commercial vehicle. The size of the commercial vehicle generic object (80B-2) is set to a size slightly bigger in both width and depth than that of a car. (3) illustrates an icon image (80A-3) indicating a two-wheeled vehicle and a generic object (80B-3) of a size corresponding to a classification of a two-wheeled vehicle. The size of the two-wheeled vehicle generic object (80B-3) is set to a width of about half the width of a car, and is set with a depth of a similar order to the depth of a car, and is an elongated substantially cuboidal shape. (4) illustrates an icon image (80A-4) indicating a pedestrian and a generic object (80B-4) of a size corresponding to a classification of a commercial vehicle. The size of the pedestrian generic object (80B-4) is set to a width of a similar order to the width of a two-wheeled vehicle, and is set to a depth of about half the depth of a two-wheeled vehicle. In the present exemplary embodiment, the display control section 64 controls which size of generic object to display.

The display control section 64 displays the generic object when the classification of the object detected by the radar device 22 is unable to be identified. The display control section 64 predicts a classification having a high probability of being present in the surroundings of the ego vehicle, and displays the generic object with a size corresponding to an object of the predicted classification.

Examples of methods to predict a classification having a high probability of being present in the surroundings of the display control section 64 are given by examples (1) to (3) below. (1) In a first specification method, the display control section 64 predicts a classification of high probability from a type of travelling vehicle lane where the ego vehicle is positioned, and displays a generic object of a size corresponding to the predicted classification. For example, a car or a commercial vehicle is taken as being a classification having a high probability of being present when a travelling vehicle lane the ego vehicle is positioned in as measured by the GNSS device 16 is a general highway, and a pedestrian is taken as being a classification having a high probability of being present when the measured travelling vehicle lane the ego vehicle is positioned in is in the vicinity of an intersection. (2) In a second specification method, the display control section 64 predicts a classification of high probability from a frequency information of classifications of object as identified by travelling vehicle lane, and displays a generic object of a size corresponding to the predicted classification. (3) **In** a third specification method, the display control section 64 predicts a classification of high probability from date and time information, and displays a generic object of a size corresponding to the predicted classification. Description is given later regarding a second exemplary embodiment for the third specification method. The method of (1) or (2) is employed in the present exemplary embodiment.

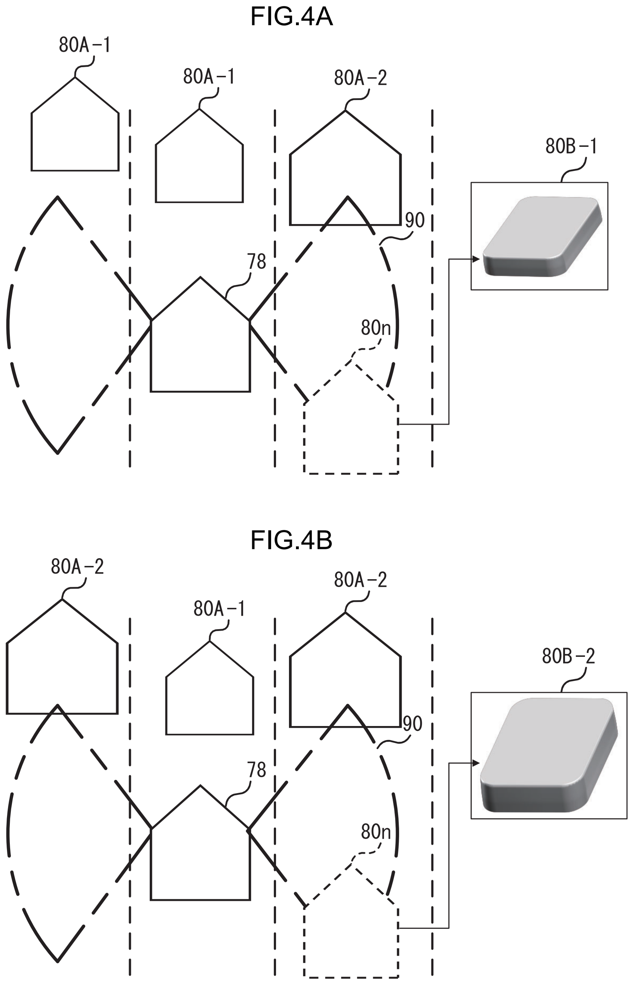

Fig. 4A and Fig. 4B are diagrams illustrating examples of predicting classifications having a high probability from frequency information of object classifications as identified by travelling vehicle lane. Classifications of three objects in front are identified based on the conditions in Fig. 4A and Fig. 4B, and a classification of one object at the side is not in an identifiable condition. In Fig. 4A, a front left car (80A-1), a front center car (80A-1), and a front right commercial vehicle (80A-2) are identified, and an unidentified object (80n) is detected at the side. Due to two objects from out of three specifiable objects being cars (80A-1), a car (80A-1) is predicted to be classification of high probability for the unidentified object (80n). In Fig. 4B, a front left commercial vehicle (80A-2), a front center car (80A-1), and a front right commercial vehicle (80A-2) are identified, and an unidentified object (80n) is detected at the side. Due to two objects from out of three specifiable objects being commercial vehicles (80A-2), a commercial vehicle (80A-2) is predicted to be a classification of high probability for the unidentified object (80n).

### Control Flow

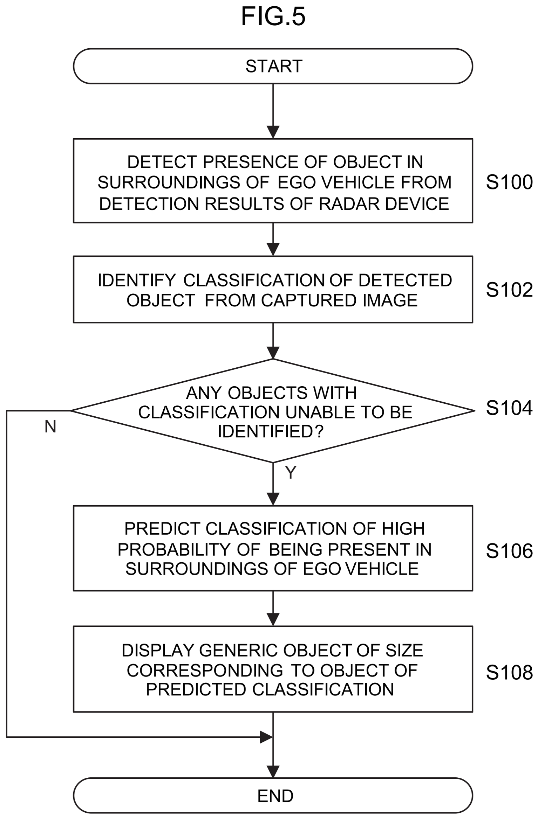

Fig. 5 is a flowchart to explain a flow of display control processing for a display control method executed by the display control ECU 42 of the present exemplary embodiment. The display control processing is repeatedly executed at a predetermined periodicity.

At step S100, the object detection section 62 detects a presence of an object in the surroundings of the ego vehicle from detection results of the radar device 22.

At step S102, the object detection section 62 identifies classification of an object detected from an image captured by the camera unit 24, and displays an icon image corresponding to the classification of the identified object on a display section.

At step S104, the object detection section 62 determines whether or not there is an object having a classification unable to be identified from out of the detected objects. Objects having a classification unable to be identified are objects detected in the detection range of the radar device 22 that are outside of the identification range of object classifications by the camera unit 24. Processing transitions to step S106 in cases in which there is an object having a classification unable to be identified, and processing is ended in cases in which there is no object having a classification unable to be identified.

At step S106, the display control section 64 predicts a classification having a high probability of being present in the surroundings of the ego vehicle.

At step S108, the display control section 64 displays a generic object of a size corresponding to an object of the predicted classification. Note that in cases in which the generic object has become an identifiable object by repeated execution of the display control processing, a switch is made at step S104 from displaying the generic object to displaying an icon image corresponding to the object classification.

The display control ECU 42 of the present exemplary embodiment is thereby able to reduce an uncanny feeling experienced by a user when displaying objects having a classification unable to be identified.

### Second Exemplary Embodiment

The second exemplary embodiment is an embodiment in which a classification having a high probability in a travelling vehicle lane is predicted from date and time information.

Explanation follows regarding processing of the display control section 64 in the second exemplary embodiment. The display control section 64 acquires a position of the ego vehicle as measured by the GNSS device 16 and map information of the map information storage section 20A, and specifies a travelling vehicle lane that the ego vehicle is traveling on by cross-referencing the position of the ego vehicle against map vehicle lanes. Data to predict a classification of high probability is setting data prepared in advance and saved for sets of specified date and time and vehicle lane. The setting data may be table data saved with classifications of high probability for sets of specified date and time and vehicle lane, or may be data of a model trained to output classifications having a high probability according to the characteristics of travelling vehicle lane and date and time. The display control section 64 uses the setting data to predict a classification of high probability corresponding to the travelling vehicle lane at the date and time of the current time, and displays a generic object having a corresponding size. The setting data may, for example, be set or trained so as to discriminate between "weekday" and "weekend/holiday" and between different time bands as specified date and times. A travelling vehicle lane with a tendency to have many commercial vehicles during "weekday" and "night time" may be set or trained with a commercial vehicle as a high probability classification. A travelling vehicle lane with a tendency to have many cars during "weekend/holiday" and "day time" may be set or trained with a car as a high probability classification.

As a flow of processing, processing executed as the display control section 64 of the step S106 of Fig. 5 may be executed as a subroutine. At step S106-A, the position of the ego vehicle as measured by the GNSS device 16 and the map information of the map information storage section 20A is acquired, and the travelling vehicle lane that the ego vehicle is traveling in is specified by cross-referencing the position of the ego vehicle against vehicle lanes in the maps. At step S106-B, the setting data is employed to predict a classification of high probability corresponding to the travelling vehicle lane at the date and time of the current time. At step S106-C, a generic object is displayed at a size corresponding to the predicted classification.

As described above, for display of an object having a classification unable to be identified, the display control ECU 42 of the second exemplary embodiment reduces an uncanny feeling experienced by a user by displaying a generic object corresponding to specified date and time and travelling vehicle lane.

Moreover, in each of the exemplary embodiments described above, embodiments have been described in which the display control program 54 that causes the display control ECU 42 to function as the object detection section 62 and the display control section 64 is pre-stored (installed) in the storage 48. However, the display control program 54 may be provided in a format recorded on a non-transitory recording medium such as an HDD, SSD, DVD, or the like.

In the flow of processing described in the above exemplary embodiments, for example, redundant steps may be omitted, new steps may be added, and the processing sequence may be swapped around within a range not departing from the spirit of the present disclosure.

## Claims

1. A display control device (42) comprising:
an object detection section (62) configured to detect a presence of an object (80) using an other-sensor (22) provided to an ego vehicle other than a camera (24), and to identify a classification of the object (80) from an image captured by the camera (24) provided to the ego vehicle; and
a display control section (64) configured to, in cases in which an object (80) has been detected inside a detection range (90) of the other-sensor (22) but outside of an identification range (92) of object classification by the camera (24) and a classification of the object (80) is unable to be identified, display on a display section (56, 58) a generic object (80B) set with a lower height than an icon employed when displaying according to the classification.

2. A display control device of claim 1 wherein the display control section (64) is configured to predict a classification having a high probability of being present in surroundings of the ego vehicle, and to display a generic object of a size corresponding to an object of the predicted classification.

3. The display control device of claim 2, wherein as a method to predict a classification having a high probability of being present in the surroundings of the ego vehicle, the display control section (64) is configured to predict the classification of high probability from frequency information of classifications of objects identified in the surroundings of the ego vehicle.

4. The display control device of any of claims 2 or 3, wherein:
classifications of high probability are set in advance for sets of specified date and time and vehicle lane; and
the display control section is configured to predict the classification of high probability in a travelling vehicle lane from the sets that have been set.

5. The display control device of any of claims 2 to 4, wherein:
the object detection section (62) is configured to identify at least a car, a commercial vehicle, a two-wheeled vehicle, and a pedestrian as the classifications of the object; and
the display control section (64) is configured to display a generic object (80B) of a size of a car, a commercial vehicle, a two-wheeled vehicle, or a pedestrian that has been predicted as the classification of the object having a high probability.
